# EUROPEAN PATENT APPLICATION

(11) **EP 1 303 070 A2**
(43) Date of publication of application: **16.04.2003**
(21) Application number: 01125176.6
(22) Date of filing: 23.10.2001
(51) Int. Cl.: H04L 1/00, H04B 7/005

(54) **Method of controlling transmit power and modulation/coding mode in a communications system**

(30) Priority: 16.10.2001 EP 01124686
(71) Applicant: Marconi Communications GmbH, 71522 Backnang (DE)
(72) Inventor: Döffinger, Dieter, 71083 Herrenberg (DE); Fazel, Khaled, 71549 Auenwald (DE)
(74) Representative: Webb, Peter Reginald

(57) **Abstract**

The method comprises controlling the transmit power of, e.g., an AP station (11) on the basis of a measured value of a parameter relating to receive power as measured in, e.g., an associated AT station (12) and selecting one of a number of available modulation and/or coding modes on the basis of the value of a parameter relating to the difference between an actual value of transmit power and a reference value of transmit power. The receive-power-related parameter may be the receive power itself or SNR or receive power density, whereas the difference-related parameter may be the difference between actual transmit power and a predetermined maximum value of transmit power.

## Description

One major aim of a transmission system is to provide a specific signal quality at the receiver in order to obtain a nearly error-free data transmission from the transmit side to the receive side. In any transmission system, but especially in a radio system, the quality of data transmission is determined by the signal-to-noise ratio (SNR) at the receive side, while applying a specific modulation and coding scheme. In a radio system especially, there are two main types of disturbance which might affect the SNR: these are firstly, the additional attenuation of the transmission path - e.g. caused by rain, fading or shadowing - and secondly, the reception of an additional signal at the receive side - e.g. interference from other transmission systems operating in the same frequency band. Interference becomes of great concern particularly in high-capacity point-to-multipoint radio transmission systems, where the area of deployment is divided into many sectors and the same frequencies are aggressively re-used. Interference is to be considered not only at the receive end, but also at the transmit end, where the transmitter acts as a source of interference for an adjacent sector operating at the same frequency.

There are two ways of increasing the transmission quality:
(1) Increase the transmission power, so that the SNR at the receiving end increases. However, this automatically increases the interference power in the neighbouring sectors.
(2) Switch to a more robust combination of modulation and coding scheme, which can tolerate a lower SNR value (i.e. lower receive power) while still maintaining high transmission quality. The drawback in this case, however, is that the capacity of the system will decrease due to a reduction in spectral efficiency.

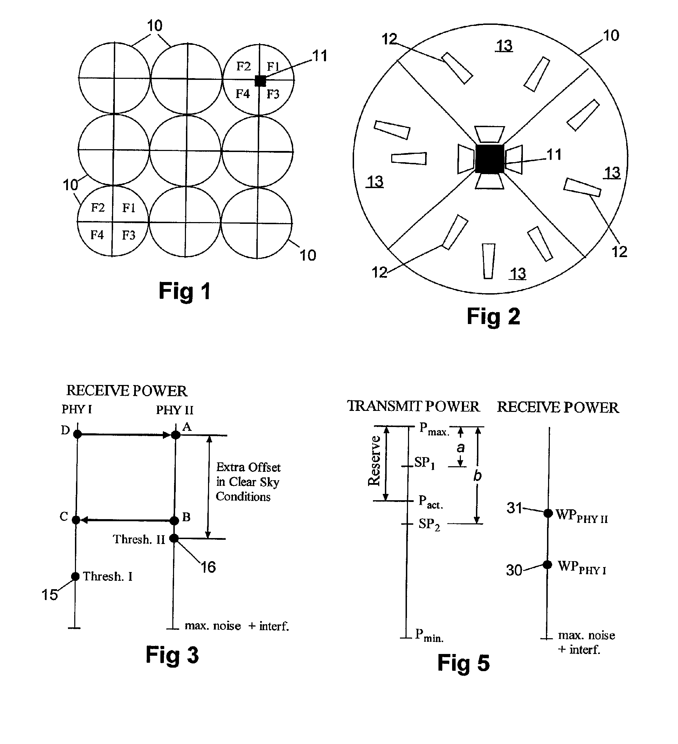

Most types of next-generation point-to-multipoint (PMP) systems employ both these measures, i.e. they both adjust their transmission power and switch their modulation schemes and/or coding, in order to minimise the effects of interference and maximise the system capacity. In these systems, the area of deployment (see Figures 1 and 2) is divided into a number of cells 10, each having an Access Point (AP) station 11 (also known as a Base Station) which is located at its centre and communicates with a number of Access Termination (AT) stations 12 (also known as Terminal Stations) distributed within the cell. The cell is partitioned into several sectors 13 (e.g. four 90-degree sectors are shown in Figures 1 and 2) by the use of cell-sectorized antennas at the AP. ATs within a sector will share the RF channel assigned to that specific sector.

In order to increase the capacity of the system, adaptive coding and modulation, i.e. adaptive PHY modes, will be employed. A PHY mode is a predefined combination of modulation and coding parameters. In contrast to transmission systems where one PHY mode dominates the entire downlink transmission (from AP toward AT), the next generation PMP systems will use more than one PHY mode (e.g. four modes) in the downlink frame. In the uplink direction (from AT to AP) different ATs will use different PHY modes according to their individual link conditions as well.

The AP controls the use of a specific PHY mode and its transmit power. If, for example, link conditions deteriorate (i.e. strong rain and strong interference or shadowing occur), then it is expected that more robust PHY modes will be allocated to some ATs and/or their transmit power will be increased. If the link recovers (e.g. rain eases off), it is expected that more spectrum-efficient PHY modes will be allocated to more ATs, within their link limitations, together with a lower transmit power. This scheme allows an efficient use of the allocated spectrum by guaranteeing a higher coverage and throughput.

A currently used control scheme, which controls both transmit power and PHY mode, is shown in Figure 3. In this system two PHY modes, modes I and II, are employed having respective associated minimum received-power thresholds 15 and 16, which represent the received power levels necessary to ensure high transmission quality in the two cases.

It is assumed initially that weather is fine, mode PHY II is in use and the received power is at point A. If now climatic conditions deteriorate, e.g. it starts to rain heavily, the received power decreases from point A in the direction of point B, but the transmit power increases to compensate for this, thereby keeping the received power at the working point A. Eventually, however, the transmit power will reach a maximum level, such that any further deterioration in weather will result in the receive power falling below point A. Once it reaches point B, the PHY mode is switched to a more robust mode having a lower threshold (threshold 15) of acceptable receive power. Thus working point B under PHY II becomes working point C under PHY I and reception improves. Any further degradation results in the receive power falling from C to Threshold I, i.e. point 15, during which reception quality is still acceptable. Once climatic conditions improve again, the receive power increases until point D is reached - this during which transmit power is not altered at all. At point D the PHY mode is switched back again to PHY II, the more spectrally efficient mode. Although not shown in Figure 3, more than two modes may be employed.

This method has two main disadvantages:
(1) In most cases the transmitted power is much higher than the power which is necessary for a high transmission quality, i.e. power levels 15 and 16, respectively, for modes I and II. When operating in fine weather, very considerable extra power is being transmitted at the transmit end, which causes an additional amount of interference for the adjacent sectors in the cell which are operating in the same frequency band. This is particularly disadvantage in the case of PMP cellular systems.
(2) The less efficient PHY mode I is brought into operation while transmit power is at its maximum level - this even though weather conditions have become favourable.

In accordance with the invention there is provided a method for controlling transmit power and transmit modulation and/or coding mode in a communications system, as defined in Claim 1.

An embodiment of the invention will now be described, purely by way of nonlimiting example only, with the aid of the drawings, of which:
Figure 1 illustrates a typical known cell-deployment scheme;
Figure 2 shows a typical sector configuration of one of the cells of Figure 1;
Figure 3 is a diagram of receive power, illustrating the mode of operation of a known power- and PHY-control scheme;
Figure 4 is a block diagram of an embodiment of the present invention;
Figure 5 shows the various operating parameters relating to transmit power and receive power in the embodiment of Figure 4;
Figures 6(a)-6(k) are illustrations of a number of consecutive stages in the operation of the embodiment of Figures 4 and 5;
Figure 7 is a block diagram of a digital realisation of a control system in accordance with the invention;
Figure 8 depicts a three-mode version of the invention, and
Figure 9 is a diagram analogous to that of Figure 6, but in which the number of PHY modes is three.

Under a preferred embodiment of the present invention it is not only the measured receive power which is taken into account, but another parameter called here the "actual fade margin reserve", which is the difference between the actual transmit power and the maximum transmit power. Using these two parameters (receive power and fade margin reserve) power and PHY-mode are controlled much more efficiently than in the prior-art systems.

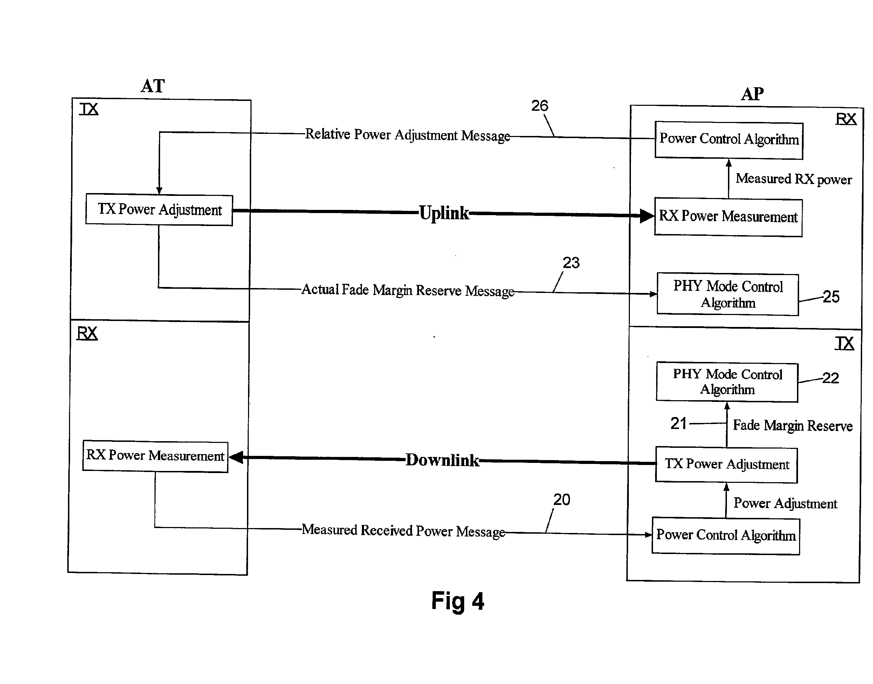

If control is carried out at the receive end, the actual fade margin reserve must be transmitted to the receive end each time the transmit power is adjusted. It is also possible to locate the control algorithm at the transmit end, in which case it is the measured received power which must be transmitted. In a PMP TDM/TDMA system, in which the AP acts as a master for all control activities, both these variants can be realised. This is illustrated in Figure 4, which shows a communications link between an AP at a cell centre and an AT inside a sector served by that AP. Communication takes place either uplink from AT to AP, or downlink from AP to AT. In the case of a downlink communication session, the AT measures its receive power and sends the value of this in a message 20 to the AP. This receive-power message is received by the AP and used to control the AP transmit power in a manner to be described. At the same time a value 21 representing the fade margin reserve between the AP's actual transmit power and its maximum transmit power is fed to a PHY-mode control algorithm 22, where it is used to decide whether or not to switch over PHY modes. A similar arrangement exists in the opposite direction, but in this case instead of a "measured receive-power" message being transmitted to the AP, it is an actual fade margin reserve message 23 which is transmitted from the AT to the AP, the value of this parameter being then used by the AP to feed the PHY-mode control algorithm 25 in the AP's receive section. The AP will also control the transmit power of the AT (signal 26) in response to the AP's measurement of its own receive power.

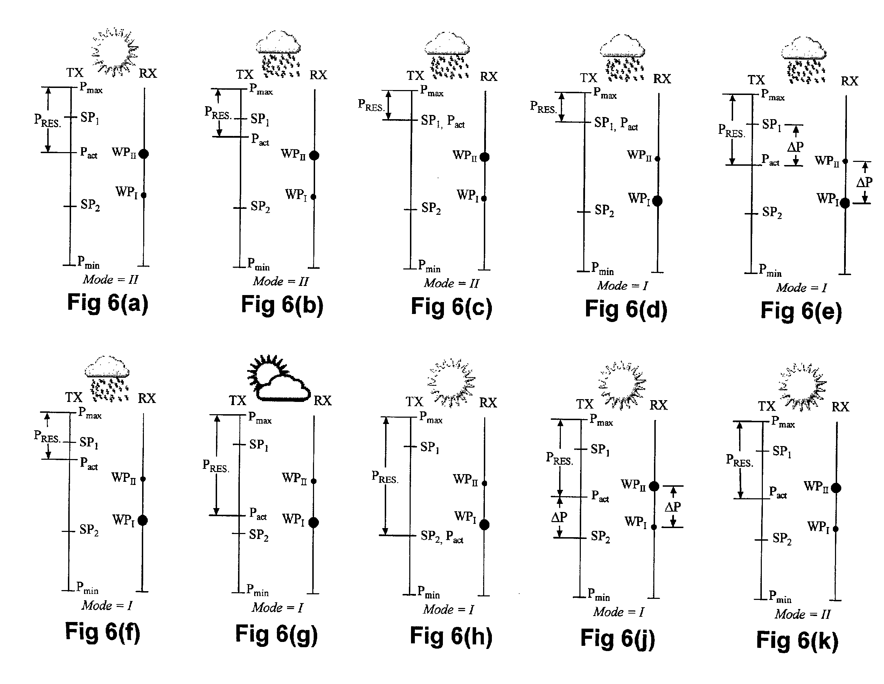

The mode of operation of the control scheme of the present invention is now explained with the aid of Figures 5, 6 and 7.

Assuming a 2-mode system, respective working points 30 and 31 (see Figure 5) are assigned to the two modes PHY I and PHY II. During fluctuating climatic conditions the responsibility of the power control system is to keep the value of the measured receive power as near as possible on the working point of the chosen PHY mode. This is done by sending power-adjustment messages to the transmitter.

PHY-mode control mainly evaluates the actual fade margin reserve. Here switching points SP₁ and SP₂ are defined for switching over PHY mode to either a more robust mode (mode I) or to a more efficient mode (mode II). If fade-margin reserve, as shown in Figure 5, goes below value *a*, then a more robust mode - mode I - is selected. Subsequently, if the reserve exceeds a value *b*, control switches back from mode I to mode II.

The switchover procedure between the two modes can be realised in different ways, depending on the communications system. If data are transmitted in a bursty way (e.g. via TDMA), a mode switchover is effected by adjusting the transmit power as the difference in the respective working points in one go with a new burst. On the other hand, in a continuous transmission system power would need to be adjusted more slowly, either before or after the switchover, depending on whether switchover is to a more or less efficient mode.

A way of controlling power and PHY mode in a TDMA setting will now be described with reference to Figures 4 and 6, the latter being a series of snap-shots of transmitter and receiver power states before, during and after mode switchover operations.

It is initially assumed that an AP is transmitting to an AT, with the AP transmitter in PHY II mode and the AT receiver operating on working point WP_{II} (see Figure 6(a)), the climate being favourable. If heavy rain now falls (see Figure 6(b)), the receive level at the AT will drop below WP_{II} and the AT will transmit to the AP a "receive power" message 20 (Figure 4) instructing the AP transmitter to increase its power so as to maintain the AT receiver working point at WP_{II}. As more and more transmitter power is needed, the fade margin reserve decreases until, at a transmitter power P_{act} = SP₁, the "Fade Margin Reserve" message 21 (Figure 4) supplied on a regular basis to the PHY mode control algorithm triggers the PHY mode to switch from Mode II to Mode I (Figure 6(d)). Thus now the working point of the AT receiver is WP_{I} instead of WP_{II}. At this point the transmit power is too high for this new threshold by a factor P = WP_{II}-WP_{I}, and therefore the AP transmit power is decreased by the same factor (Figure 6(e)). If the transmit power were not decreased from its previous level, SP₁, power would be unnecessarily wasted and there would be a high risk of unwanted interference with adjacent sectors.

Assuming now that heavy rain continues (Figure 6(f)), receive power starts again to drop below its working point, which this time is WP_{I}, and so transmitter power is increased to maintain power at this new working point. However, if rain now ceases and the weather starts to clear, the transmit power necessary to maintain power at WP_{I} is reduced (Figure 6(g)), until actual transmit power P_{act} drops to the lower switching threshold SP₂ (Figure 6(h)) whereupon two actions occur: firstly, transmit power is raised again by ΔP (Figure 6(j)), which increases receive power from working point WP_{I} to WP_{II} and, secondly, PHY mode is switched over from Mode I to Mode II (Figure 6(k)). If the transmit power were not first increased by ΔP before the mode was changed, Mode II would be entered while receive power was well below its working point WP_{II}, with the result that the reliable operation of the system could be prejudiced.

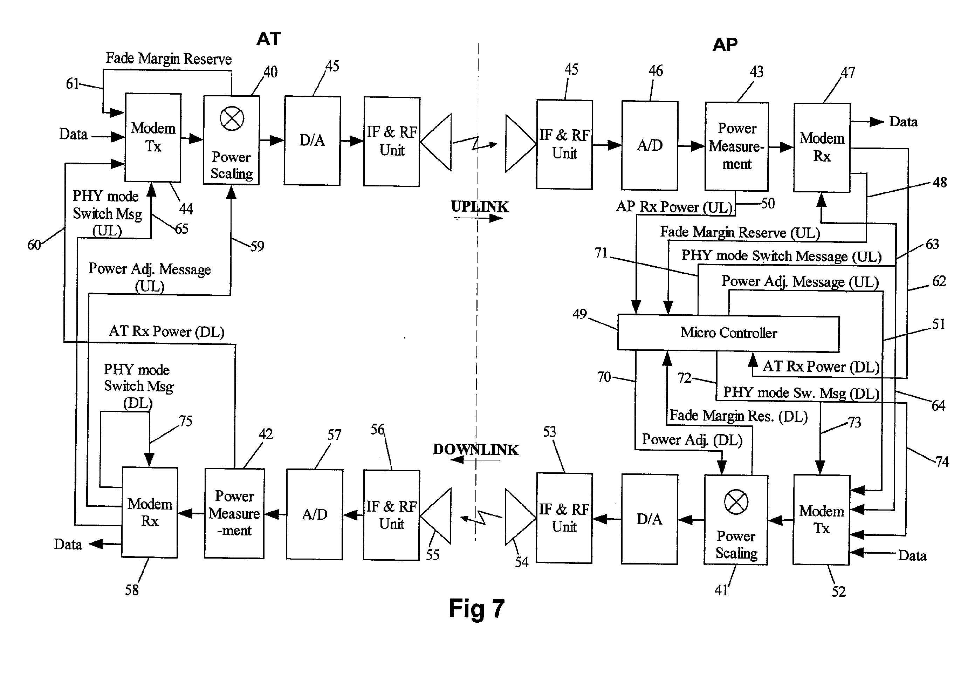

A practical realisation of the invention is illustrated in Figure 7, in which power control and PHY-mode control are included for both uplink and downlink directions. Again, in Figure 7 the control of transmit power is carried out in the AP. More specifically here, however, adjustment of transmit power is performed by a process of digital scaling in blocks 40, 41 in the transmit sections of the AT and AP, respectively; also, the measurement of receive power is executed digitally in blocks 42/43.

Describing control in the uplink direction first, the "Fade-Margin Reserve" of the AT transmitter (line 61) is fed into a modem 44 along with data, is scaled digitally in scaler 40, converted into analogue form in D/A converter 45 and, after frequency conversion, finally transmitted to the AP. The "Fade-Margin Reserve" message is received by the AP in IF/RF block 45, is converted into digital form in block 46 and, along with the received data, is demodulated in modem 47 and fed as AT fade-margin reserve signal 48 into a microcontroller 49. The receive power in the AP's receive section is measured in block 43 and also sent to the microcontroller via an "RX power" line 50.

Instructions to scale the AT's transmit power as a result of falling receive power in the AP are supplied by the microcontroller 49 as a "Power Adjust Message" 51, are modulated in modem 52, frequency-converted in IF/RF block 53 and transmitted via antenna 54. These instructions are received by antenna 55, frequency-converted in block 56, converted into digital form in block 57 and demodulated in modem 58, which then outputs a "Power Adjust Message" 59 in order to scale, accordingly, the transmit power of the AT in block 40.

A PHY-mode switching signal 71 is generated by the microcontroller 49 in accordance with a switching algorithm designed to carry out the processes described earlier. This signal has two destinations: one (line 64) to switch the mode of the AT transmit section in response to the AT fade margin reserve parameter received by the AP and stored in the microcontroller 49, and another (line 63) to control the mode of the AP receive section of modem 47, so that uplink PHY mode is switched for the transmit and receive sections. The signal on line 64 is modulated along with the "Power Adjust Message" 51 in modem 52, is transmitted to the AT, is demodulated by the AT's modem 58 and supplied as the "PHY-Mode Switching Message" 65 to the Tx modem 44 of the AT. Note that control of AP receive mode in tandem with control of AT transmit mode is necessary because both ends are to use the same PHY-mode at the same time, in order to be able to establish uplink communication.

As regards downlink control, the receive power of the AT, measured in block 42, is supplied as an "AT Rx Power" signal 60 to the modem 44, where it is modulated and received by the AP, being then demodulated in modem 47 and supplied as an "AT Rx Power" signal 62 to the microcontroller 49, which in turn issues a "Power Adjustment" signal 70 to the power scaler 41, thereby to adjust the transmit power of the AP accordingly. Analogous to the uplink scenario, the microcontroller 49 issues a downlink PHY mode switch message 72, which controls the mode of the AP's own transmission section via modem 52 (see line 73) and at the same time controls the AT's Rx mode via a signal 74, which is modulated in modem 52, transmitted to the AT and then demodulated in modem 58, this then outputting a "PHY mode switch message" signal 75 instructing the AT's own Rx mode to change.

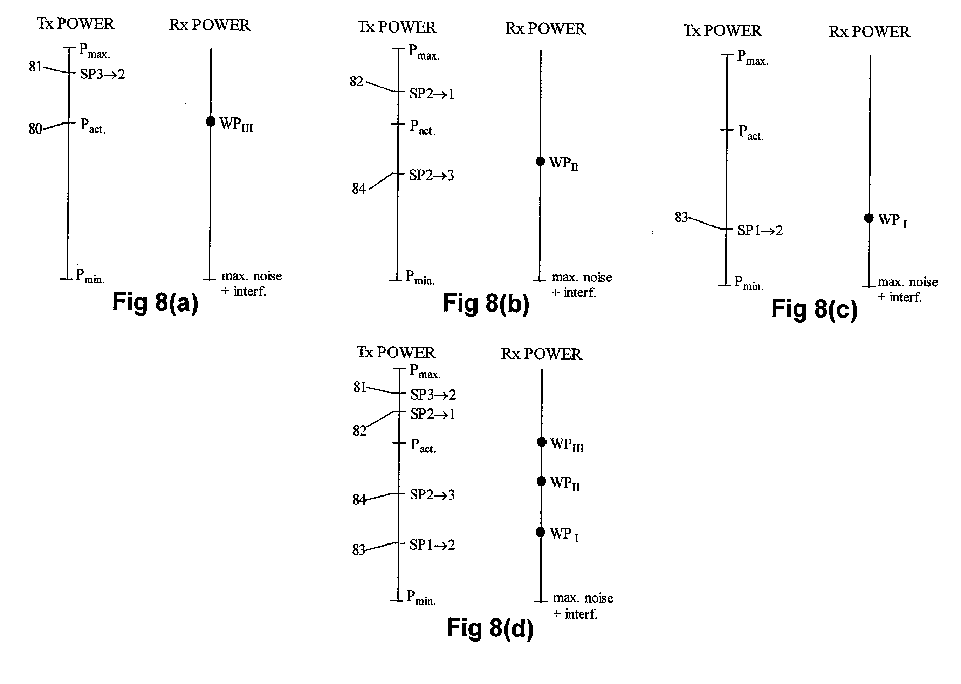

The number of PHY modes that may be used with the invention is not limited to two, but may be three or more. An example of a possible 3-mode scheme is shown in Figure 8, in which four switching points, SP₃₋₂, SP₂₋₁, SP₂₋₃ and SP₁₋₂, are allocated to the transmit section of the AT and/or the AP and three working points, WP_{I}, WP_{II} and WP_{III}, are allocated to the associated receive section(s). Normally each PHY mode has two switching points: one to a more robust PHY mode and one to a more efficient PHY mode; however, the most and least efficient modes have only one switching point, since they have only one adjacent PHY mode to switch to.

WP_{III} is the working point relating to mode III (see Figure 8(a)). If P_{act} rises above the level shown at 80 and exceeds the switching-point level 81, the transmit mode will be switched from III to II, as shown in Figure 8(b). Similarly, if conditions worsen still further and transmit power now exceeds threshold 82, mode switching will again take place from mode II to mode I (Figure 8(c)). Assuming now that conditions improve, the required transmit power (P_{act}) will decrease until it drops below threshold 83, upon which the transmit mode will change from mode I to mode II. Similarly, further improvements will result in threshold 84 being crossed (in an upward direction), so that the mode will change from II to III. The situation is then the same as that shown in Figure 8(a).

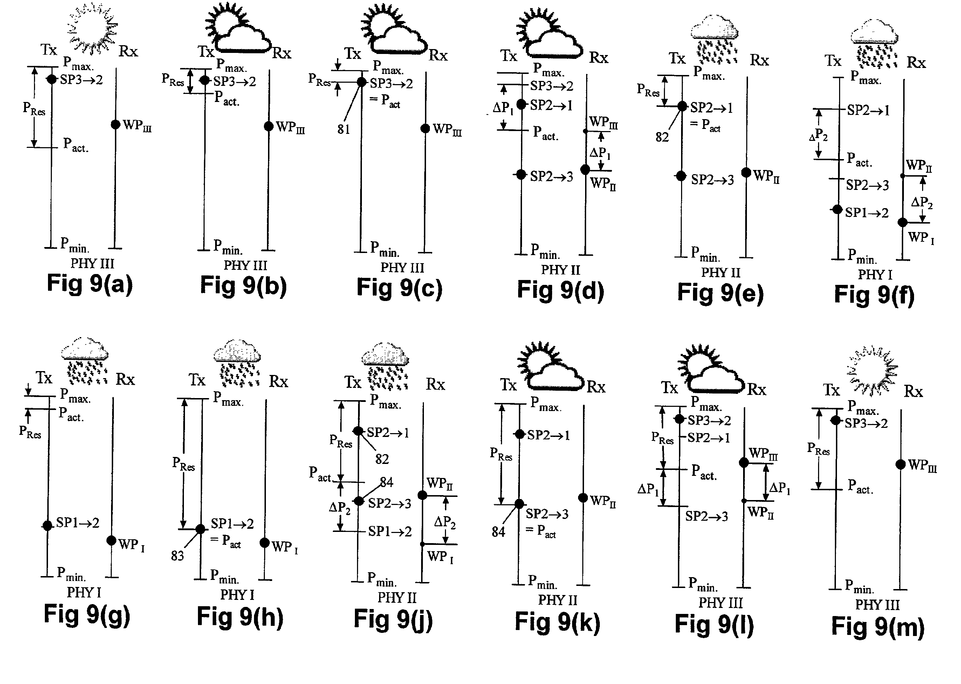

Figure 9 is a series of snapshots similar to that of Figure 6, but with the difference that this time the system comprises three PHY modes instead of just two. Assume initially that Mode III is in operation and actual transmit power P_{act} is as shown in Figure 9(a). If now, for example, climatic conditions worsen, receive power will fall and, in order to maintain receive power at the WP_{III} level, transmit power will increase, thereby reducing the fade-margin reserve. Once actual power reaches the threshold 81 (Figure 9(c)), the microcontroller switches over to Mode II and transmit power is reduced and subsequently adjusted to keep receive power at the new threshold of WP_{II} (Figure 9(d)). A further deterioration in weather conditions occurs, which calls for renewed increases in transmit power, until the actual power reaches value 82 (Figure 9(e)), upon which a second switching operation to Mode I takes place (Figure 9(f)). Again, transmit power drops to a level which allows a constant receive power WP_{I} to be maintained. Rain falls even more heavily, so that, during the worst of the weather conditions (Figure 9(g)) very little reserve is left, but then the rain becomes lighter, the reserve grows until threshold 83 is reached (Figure 9(h)), upon which mode II is again selected (Figure 9(g)). P_{act} is now between thresholds 82 and 84, but decreases as the sun comes out and eventually reaches threshold 84 (Figure 9(k)), at which point mode III is again switched in (Figure 9(1)). Finally, Figure 9(m) shows a situation very similar to the initial situation of Figure 9(a).

Although the invention has so far been described as requiring the measurement of receive power and actual fade-margin reserve, in practice alternative indicators could be employed, such as SNR or receive power density instead of receive power and any parameter representing the actual transmit power in place of fade-margin reserve.

To summarize, the invention strives to mitigate the drawbacks of the presently known power-control schemes; in particular, it avoids the high transmit powers normally necessary for mode-switching to take place (see, for example, level D in Figure 3) and allows switching to occur for lower levels of transmit power. This it does by measuring the already-described parameter "actual fade-margin reserve" (or equivalent parameter) and allowing switching to take place before this reaches zero. This has the advantage of greatly reducing the problem of interference with adjacent sectors, since transmit power is always kept within a range of values sufficient to provide reliable communication, yet low enough to minimise the risk of interference. Additionally, in countries where the power flux density (PFD) is limited at the border of the area of deployment by the regulation authority, the low transmit power helps to meet these requirements. The inventive method can be adapted to all common radio transmission systems featuring power control and PHY-mode control. In addition, the transmit power of each individual AT can be monitored and controlled in the AP, thus enabling the transmit power of each AT to be limited depending on local operating conditions; this is very important in a cellular environment.

## Claims

1. A method of controlling transmit power and transmit modulation and/or coding mode in a communications system having a receive end, a transmit end and a plurality of available such transmit modulation and/or coding modes, wherein said transmit power is controlled on the basis of a measured value of a parameter relating to receive power and an operating modulation and/or coding mode is selected on the basis of the value of a parameter relating to the difference between an actual value of transmit power and a reference value of transmit power.

2. Method as claimed in Claim 1, comprising:
(a) establishing working points for receive power, these working points relating to respective said modes;
(b) establishing mode-switching points for transmit power, these mode-switching points relating to respective said modes;
(c) measuring a parameter relating to receive power and controlling transmit power in order to maintain the receive power approximately at a first of the working points;
(d) measuring a difference between actual transmit power and a reference transmit-power level and bringing about switching of the modulation and/or coding mode from the first mode to a second mode when said difference passes a first of the switching points;
(e) controlling transmit power such as to maintain the receive power approximately at the second of the working points when said difference passes the first switching point;
(f) switching from the second mode back to the first mode when said difference passes a second of the switching points in the opposite direction, and
(g) controlling transmit power such as to maintain the receive power approximately at the first working point when said difference passes said second switching point.

3. Method as claimed in Claim 1 or Claim 2, wherein the parameter relating to receive power is one of a group comprising: the receive power itself, the SNR at the receive end and the receive power density.

4. Method as claimed in any one of the preceding claims, wherein the reference transmit-power level is a predetermined maximum value of transmit power.

5. Method as claimed in any one of the preceding claims, wherein the first mode is a relatively efficient mode and the second mode is a relatively robust mode and step (e) follows step (d) in time, whereas step (g) precedes step (f) in time.

6. Method as claimed in any one of the preceding claims, wherein the adjustment of transmit power takes place in the digital domain.

7. Method as claimed in any one of the preceding claims, wherein the controlling instructions for the control of transmit power and for the selection of operating mode are generated at the receive end.

8. Method as claimed in any one Claims 1 to 6, wherein the controlling instructions for the control of transmit power and for the selection of operating mode are generated at the transmit end.

9. Method as claimed in any one of the preceding claims, wherein the communications system is a point-to-multipoint system comprising an Access Point (AP) and an Access Termination (AT) and the controlling instructions for the control of transmit power and for the selection of operating mode are generated in the Access Point during both uplink and downlink communication sessions.

10. Method as claimed in Claim 9, wherein the point-to-multipoint system is one of a group comprising: a TDM/TDMA system, an FDM/FDMA system and a CDM/CDMA system.

11. Method as claimed in any one of Claims 1 to 8, wherein the communications system is a mobile system.

12. Method as claimed in any one of Claims 1 to 8, wherein the communications system is a fixed point-to-point system.

13. Method substantially as shown in, or as hereinbefore described with reference to, Figures 4 and 6, or Figures 4, 6 and 7, or Figures 4 and 8 of the drawings.
